# EUROPÄISCHE PATENTSCHRIFT

(11) **EP 1 240 050 B1**
(45) Veröffentlichungstag und Bekanntmachung des Hinweises auf die Patenterteilung: **19.11.2003**
(21) Anmeldenummer: 00983057.1
(22) Anmeldetag: 18.10.2000
(51) Int. Cl.: B60N 2/44, F16H 31/00

(54) **Beidseitig wirkender Antrieb für Verstellvorrichtungen in Kraftfahrzeugen**
Bilateral Drive for Motor Vehicle Adjusting Devices
Mécanisme de commande à action bilatérale pour dispositif de réglage de véhicules à moteur

(30) Priorität: 21.10.1999 DE 19952633
(43) Veröffentlichungstag der Anmeldung: 18.09.2002
(73) Patentinhaber: Brose Fahrzeugteile GmbH & Co. KG Coburg, 96450 Coburg (DE)
(72) Erfinder: SCHECK, Georg, 96497 Weitramsdorf (DE); SCHUMANN, Peter, 96253 Untersiemau (DE)
(74) Vertreter: Baumgärtel, Gunnar, Dr.
(86) Internationale Anmeldenummer: DE0003773
(87) Internationale Veröffentlichungsnummer: WO01028808

(56) Entgegenhaltungen:
- CH-A- 533 785
- DE-A- 19 527 912
- DE-A- 19 725 899
- US-A- 3 204 133
- US-A- 3 876 848

## Beschreibung

Die Erfindung betrifft einen beidseitig wirkenden Antrieb für Verstellvorrichtungen in Kraftfahrzeugen gemäß dem Oberbegriff des Anspruchs 1. Die Erfindung ist insbesondere für die Verstellung von Fahrzeugsitzen oder -komponenten wie Sitzlehnen und Sitzkissen vorgesehen.

Aus der DE 197 25 899 A1 ist ein beidseitig wirkender Antrieb zur Erzeugung einer Drehbewegung bekannt, die wahlweise ausgehend von einer Nullpunkt-Lage eines Antriebshebels in die eine oder andere Antriebsrichtung erfolgt, wobei ein anzutreibendes Element nur dann gedreht wird, wenn sich der Antriebshebel von der Nullpunkt-Lage weg bewegt, während bei einer Bewegung des Antriebshebels in Richtung der Nullpunkt-Lage das anzutreibende Element nicht mitgenommen wird. Der Antriebshebel ist um eine Antriebsachse schwenkbar und mit Verriegelungsmitteln gekoppelt, die mit einer auf dem Umfang eines Antriebsrades angeordneten Verzahnung in Eingriff bringbar sind. Das Verriegelungsmittel weist ein einteiliges Kippelement auf, das in Abhängigkeit von der jeweiligen Antriebsrichtung zwischen zwei Endpositionen hin und her kippt, wobei in jeder Endposition eine Verriegelung des Kippelements mit der Verzahnung des Antriebsrades erfolgt.

Aus der DE 195 27 912 A1 ist ein beidseitig wirkender Antrieb bekannt, bei dem ein Antriebshebel auf einer Antriebsachse gelagert ist und schwenkbare Kopplungselemente trägt, deren mit Verzahnungselementen versehene freie Enden mit der auf dem Umfang eines Antriebsrades angeordneten Verzahnung in Eingriff bringbar sind. Den schwenkbaren Kopplungselementen ist eine Kulissenführung zugeordnet, die je nach Schwenkrichtung des Antriebshebels das jeweils unbelastete Kopplungselement von der Verzahnung des Antriebsrades abhebt. Dabei sind beidseitig und außerhalb der Kulissenführung Federbereiche vorgesehen, die auf die Kopplungselemente eine entgegen der Einrastrichtung der Verzahnung gerichtete Kraft ausüben, wodurch sogenannte Ratschengeräusche bei der Bewegung vermieden werden.

Die beschriebenen Antriebe weisen eine relativ hohe Anzahl von Einzelteilen auf, die aufwendig zu fertigen und zu montieren sind. Ebenso kann es bei einer Stellung "Zahn-auf-Zahn" von Kopplungselement und Antriebsrad zu einem Überspringen und einer ruckartigen Bewegung an dem Antriebshebel kommen und bei der Rückstellbewegung des Antriebshebels kommt es zu sogenannten Ratschengeräuschen.

Ausgehend von der DE 197 25 899 A1 liegt der Erfindung das Problem zugrunde, einen beidseitig wirkenden Antrieb zur Erzeugung einer Drehbewegung zur Verfügung zu stellen, der mit einer geringen Anzahl von Einzelteilen auskommt, einfach zu montieren ist, bei der Betätigung wenig Geräusche verursacht und in jeder Position koppelbar und zurückbewegbar ist.

Dieses Problem wird erfindungsgemäß durch einen beidseitig wirkenden Antrieb mit den Merkmalen des Anspruchs 1 gelöst.

Die erfindungsgemäße Lösung sieht vor, das Antriebsrad mit dem Antriebshebel über eine Kombination zumindest eines Formschlußelementes mit zumindest einem zugeordneten elastischen Element zu koppeln. Das elastische Element läßt sich derart verformen, daß sich seine Kontur an die Kontur des Formschlußelementes anpaßt, wodurch diese beiden Elemente miteinander in Eingriff treten. Durch diesen stufenlos realisierbaren Formschluß wird ein Überspringen von Zähnen des Kopplungselementes vermieden, da eine Kopplung immer dort entsteht, wo die Formschlußelemente mit dem elastischen Element in Eingriff treten.

Gleichzeitig bewirkt das Vorsehen eines elastischen Elements, z.B. eines volumen- bzw. gummielastischen Elementes, eine Dämpfung der bei der Verstellung entstehenden Geräusche.

In einer Variante der Erfindung ist an dem Antriebsrad zumindest ein elastisches Element angeordnet, und an den Kopplungselementen sind Formschlußelemente vorgesehen, die bei Einleitung eines Drehmomentes über die Kopplungselemente das elastische Element verformen. Diese Verformung erfolgt makroskopisch konturbildend und zwar derart, daß eine kraft- bzw. drehmomentübertragende Koppelung zwischen den Formschlußelementen und dem elastischen Element entsteht. Die Konturbildung ist dabei derart ausgeprägt, daß eine hinreichend tragfähige Koppelung zwischen den Formschlußelement und dem elastischen Element entsteht, so daß das Antriebsrad gedreht werden kann. In dem Bereich der Koppelung von den Formschlußelementen und dem elastischen Element ist es somit möglich, in Umfangsrichtung des Antriebsrades wirkende Kräfte zu übertragen, um eine Drehung zu bewirken. Es erfolgt durch das Verformen des elastischen Elementes ein Verzahnen mit den Formschlußelementen, so daß von einer quasiformschlüssigen Verbindung gesprochen werden kann.

Alternativ dazu ist vorgesehen, an dem Antriebsrad die Formschlußelemente anzuordnen und die Kopplungselemente mit den entsprechenden elastischen Elementen zu versehen, wodurch im Endeffekt die gleiche Funktion erfüllt wird. Welcher der beiden Alternativen der Vorzug gegeben wird, hängt von den jeweiligen Einsatzgebieten und den fertigungstechnischen Rahmenbedingungen des Antriebes ab.

Die elastischen Elemente an dem Abtriebsrad oder an den Kopplungselementen sind bevorzugt formschlüssig oder stoffschlüssig an dem Antriebsrad oder den Kopplungselementen befestigt, wodurch sich insbesondere eine Reduzierung der Montagetätigkeiten ergibt. Dabei können die elastischen Elemente vorzugsweise aus Polyurethan bestehen, jedoch sind auch andere elastische Werkstoffe z.B. gummieelastische Werkstoffe oder der Werkstoff, der unter dem Warenzeichen "Vulkollan" vertrieben wird, vorgesehen.

Zweckmäßigerweise haben die im wesentlichen starren Formschlußelemente die Gestalt einer Verzahnung, wobei jedes Formschlußelement ein oder mehrere Zähne aufweisen kann. Die Ausgestaltung mit nur einem Zahn, also quasi ein in das elastische Element hineinragender Stab, hat den Vorteil eines geringen Fertigungsaufwandes, birgt jedoch die Gefahr, daß das elastische Element aufgrund des tiefen Eindringens des einzelnen Zahnes beschädigt wird. Es ist daher alternativ vorgesehen, an dem Formschlußelement mehrere Zähne anzubringen, so daß die Zähne maximal mit ihrer Zahnhöhe in das elastische Element eindringen können. Mehrere Zähne haben zudem den Vorteil, daß die Kraft gleichmäßig über eine größere Fläche auf das elastische Element übertragen wird.

Für den Fall, daß an dem Antriebsrad die Formschlußelemente angeordnet sind, sind diese vorteilhafterweise in Gestalt von zwei konzentrischen, sägezahnförmigen Verzahnungen ausgebildet, wobei die Steilflanken der jeweiligen sägezahnförmigen Verzahnung zueinander entgegengesetzt ausgerichtet sind.

Um einen geringen Leerweg bei der Verstellung des Antriebshebels zu erreichen, stehen in einer bevorzugten Ausgestaltung die Kopplungselemente in der Nullpunktlage des Antriebshebels mit dem Antriebsrad in Eingriff; das bedeutet, daß die starren Formschlußelemente und die elastischen Elemente in der Nullpunktlage miteinander in Berührung stehen und daß bei einer Drehmomentübertragung das belastete starre Formschlußelement sich in dem elastischen Element abbildet.

Vorteilhafterweise ist den Kopplungselementen bei dieser Ausgestaltungsform eine Kulissenführung zugeordnet, die die unbelasteten Kopplungselemente während einer Bewegung des Antriebshebels aus der Nullpunktlage von dem Antriebsrad abhebt und bis zum Wiedererreichen der Nullpunktlage auch abgehoben hält. Auf diese Weise wird vermieden, daß die unbelasteten Kopplungselemente bei der Verstellbewegung über die Formschlußelemente gleiten. Ebenfalls wird vermieden, daß bei der Rückstellbewegung des Antriebshebels das Antriebsrad in Richtung der Rückstellbewegung mitgenommen wird.

Eine Weiterbildung dieser Variante sieht vor, daß beidseitig außerhalb der Kulissenführungsbereiche Federbereiche angeordnet sind, die auf die belasteten Kopplungselemente eine entgegen der Eingriffsrichtung gerichtete Kraft ausüben. Die Federkraft ist dabei so bemessen, daß bei einer Bewegung des Antriebshebels aus der Nullpunktlage das belastete Kopplungselement mit dem Antriebsrad in Eingriff bleibt, jedoch bei einer Bewegung zur Nullpunktlage hin außer Eingriff gebracht wird. Auf diese Weise wird sichergestellt, daß bei einer Rückstellbewegung des Antriebshebels in die Nullpunktlage keine der Kopplungselemente mit dem Antriebsrad gekoppelt ist. Das unbelastete Kopplungselement ist aufgrund der Kulissenführungsbereiche außer Eingriff gebracht und das belastete Kopplungselement ist aufgrund der Federkraft des Federbereichs von dem Antriebsrad entkoppelt. Während der Rückstellbewegung des Antriebshebels in die Nullpunktlage befinden sich also das elastische Element und die Formschlußelemente nicht miteinander in Eingriff, wodurch die Rückstellbewegung erleichtert wird und der Verschleiß, insbesondere an dem elastischen Element verringert wird.

Alternativ dazu ist vorgesehen, daß die Kopplungselemente in der Nullpunktlage nicht mit dem Antriebsrad in Berührung stehen. Damit wird einer plastischen Verformung des elastischen Elementes aufgrund des ständigen Kontaktes mit den Formschlußelementen vorgebeugt. Dazu ist eine Kulissenführung den Kopplungselementen zugeordnet, die während einer Bewegung eines Antriebshebels aus der Nullpunktlage das jeweils zu belastende Kopplungselement mit dem Antriebsrad in Eingriff bringt und dafür sorgt, daß bei der entgegengesetzten Bewegung, also bei der Bewegung des Antriebshebels in Richtung der Nullpunktlage das unbelastete Kopplungselement außer Eingriff mit dem Antriebsrad bleibt.

Zur Erreichung eines möglichst kleinen Bauraumes ist es vorgesehen, die Kulissenführung in einem Abdeckelement des Antriebs auszubilden, wobei an jedem Kopplungselement ein Führungselement angeordnet ist, das in der entsprechenden Kulissenführung geführt wird. Je nach Anordnung des Abdeckelementes ist es vorgesehen, das Führungselement axial oder radial von dem Kopplungselement abstehen zu lassen, wobei die Kulissenführung entsprechend gestaltet ist.

Zur möglichst schnellen und präzisen Führung der Kopplungselemente weisen die Führungselemente einen nicht abgerundeten Eckabschnitt auf, wodurch die Kopplungselemente schnell abgehoben bzw. schnell in Eingriff mit dem Antriebsrad gelangen.

Anhand von in der Zeichnung dargestellten Ausführungsbeispielen soll der der Erfindung zugrundeliegende Gedanke näher erläutert werden. Es zeigen:
- Figur 1:: einen Antrieb mit einem elastischen Element am Antriebsrad;
- Figur 2:: einen Antrieb mit elastischen Elementen an den Kopplungselementen;
- Figur 3:: einen Antrieb mit zwei konzentrischen Stirnverzahnungen des Antriebsrades;
- Figur 4:: einen Antrieb mit angeformten Kopplungselementen und einem stirnverzahnten Antriebsrad;
- Figur 5:: einen Antrieb mit angeformten Kopplungselementen und einem innenverzahnten Antriebsrad sowie Kulissenführungen und Federbereichen;
- Figur 5a:: eine Einzelheit einer Kulissenführung mit einem entkoppelten Kopplungselement;
- Figur 6:: einen Antrieb mit gelenkig gelagerten Kopplungselementen;
- Figur 7:: einen Antrieb mit zwangsgeführten Kopplungselementen;
- Figur 8:: einen Antrieb mit federbelasteten, angeformten Kopplungselementen;
- Figur 9:: eine Variante radial federnder Kopplungselemente sowie
- Figur 10:: einen Antrieb mit einem als Wippe ausgebildeten Kopplungselement.

Gleiche Bezugsziffern in den Figuren bezeichnen gleiche Bauteile. Aus Gründen der Übersichtlichkeit wurden nicht in allen Figuren sämtliche Bezugszeichen eingetragen.

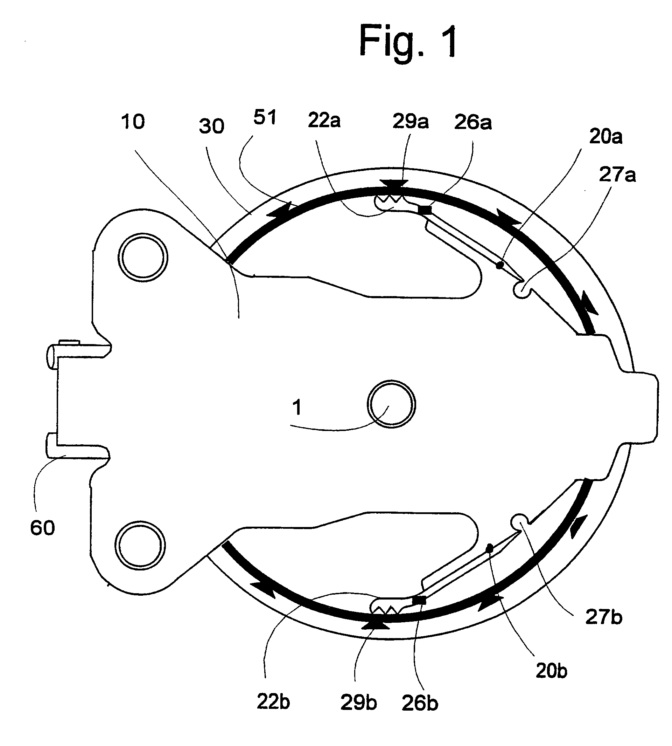

Fig. 1 zeigt einen um eine Achse 1 gelagerten Antriebshebel 10, an dem Kopplungselemente 20a und 20b einstückig angeformt sind. Die Kopplungselemente 20a und 20b weisen bevorzugt einen runden oder rechteckigen Querschnitt auf und sind aus Metall oder einem Kunststoff gefertigt und ermöglichen eine radiale Verlagerung. Dabei sind die Kopplungselemente 20a und 20b dergestalt an dem Antriebshebel 10 angeformt, daß ein jeweils als Kopplungsbereich 22a bzw. 22b ausgebildetes Ende des Kopplungselementes 20a bzw. 20b mit einem elastischen Element 51 in Eingriff bringbar ist, wobei das elastische Element 51 drehfest mit einem Antriebsrad 30 verbunden ist.

Die an den Kopplungselementen 20a und 20b angeformten Kopplungsbereiche 22a und 22b weisen in Richtung auf das elastische Element 51 Formschlußelemente 29a, 29b auf, die als Verzahnung ausgebildet sind, Weiterhin sind an den Kopplungselementen 20a und 20b Führungselemente 26a und 26b befestigt, die axial - also aus der Zeichenebene heraus - hervorstehen und in eine nicht dargestellte Kulissenführung eingreifen, so daß bei einer Betätigung des Antriebshebels 10 aus der dargestellten Nullpunktlage eine entsprechende radiale Bewegung eines nicht belasteten Kopplungselementes in Richtung auf die Achse 1 bewirkt wird. Auf die Funktionsweise der Kulissenführung und der Führungselemente 26a und 26b wird weiter unten ausführlich eingegangen werden. Die radiale Beweglichkeit der Kopplungselemente 20a und 20b wird durch deren elastische Ausbildung ermöglicht. Die radiale Elastizität wird durch die Ausnehmungen 27a und 27b am Ansatz der Kopplungselemente 20a und 20b an dem Antriebshebel 10 begünstigt.

Bei einer Betätigung des Antriebshebels 10 aus der dargestellten Nullpunktlage in Uhrzeigerrichtung wird die (zunächst allenfalls in berührendem Kontakt mit der Oberfläche des elastischen Elementes 51 stehende) Verzahnung 29b des Kopplungsbereiches 22b des Kopplungselementes 20b in das elastische Element 51 gedrückt und bildet so selbständig eine korrespondierende Verzahnung aus. Über diesen Eingriff der Formschlußelemente 29b in das elastische Element 51 wird das über den Antriebshebel 10 eingeleitete Drehmoment auf das elastische Element 51 übertragen, das wiederum, aufgrund der drehfesten Lagerung des elastischen Elementes 51 mittels der Schwalbenschwanzführungen, das Drehmoment auf das Antriebsrad 30 überträgt und dieses in Drehung versetzt. Das Antriebsrad 30 ist seinerseits entweder direkt oder über ein Getriebe bzw. ein Transmissionsglied mit der zu verstellenden Einrichtung verbunden.

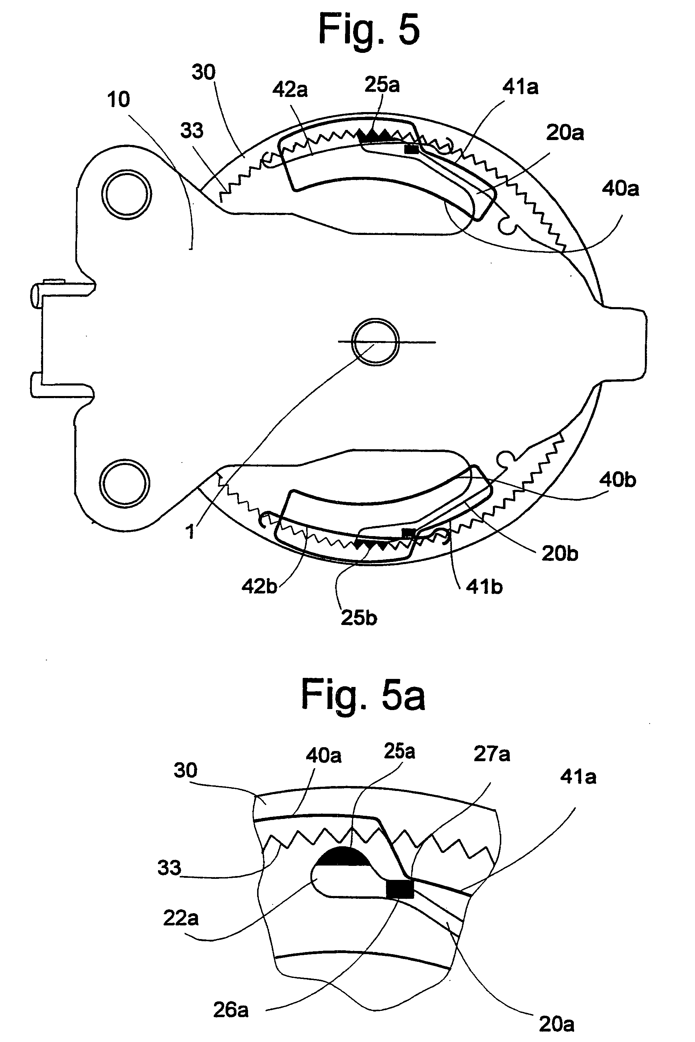

Nach erfolgter Verstellung wird der Antriebshebel 10 mittels einer Rückstellfeder 60, die hier nur angedeutet dargestellt ist, in seiner Ausgangslage bzw. in die Nullpunktposition zurückbewegt. Um ein Mitnehmen des Antriebsrades 30 bei der Rückstellbewegung des Antriebshebels 10 zu vermeiden, können verschiedene Varianten vorgesehen sein. Neben einer Kulissenführung der Führungselemente 26a bzw. 26b, die die entsprechend unbelasteten Kopplungselemente 20a bzw. 20b bei der Verstellbewegung von dem elastischen Element 51 abheben, kann zur Vermeidung der Rückdrehung des Antriebsrades 30 bei der Rückstellbewegung des Antriebshebels 10 in seine Nullpunktlage eine entsprechende Ausbildung der Formschlußelemente 29a bzw. 29b vorgesehen sein. Dabei sind die Formschlußelemente 29a bzw. 29b sägezahnförmig ausgestaltet, wobei die Steilflanken in Richtung der Verstellbewegung angeordnet sind und die Rückseiten der Steilflanken entsprechend flach ausgebildet sind, so daß ein Zurückgleiten auf dem elastischen Element 51 ohne weiteres möglich ist. Eine alternative Form der Führung der Kopplungsbereiche wird später anhand der Figuren 5 und 5a erläutert.

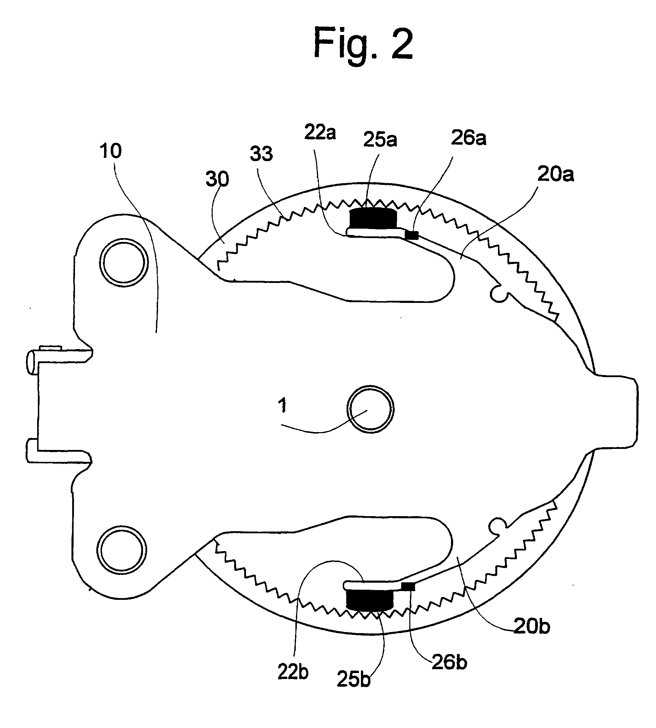

Die Fig. 2 zeigt einen Antrieb, der im wesentlichen dem Aufbau des Antriebes gem. Fig. 1 entspricht. An den Endbereichen der angeformten Kopplungselemente 20a und 20b befinden sich statt der Formschlußelemente gem. Fig. 1 elastische Elemente 25a und 25b, die entweder aufgeklebt oder auf andere Art und Weise befestigt wurden oder die bei einer entsprechenden Ausgestaltung des Antriebshebels 10 aus Kunststoff einstückig angeformt wurden. Bei einer einstückigen Ausbildung des Antriebshebels 10 und der elastischen Elemente 25a bzw. 25b ist es vorgesehen, zur optimalen Werkstoffanpassung unterschiedliche Materialien zu verwenden, die beispielsweise in Zweikomponenten-Spritzgießverfahren miteinander verbunden werden.

Entsprechend ist auf dem inneren Umfang des als Hohlrad ausgebildeten Antriebsrades 30 eine Innenverzahnung 33 ausgebildet, die die entsprechenden Formschlußelemente bereitstellt. Analog zu dem Antrieb gem. Fig. 1 sind auch hier Führungselemente 26a und 26b vorgesehen, die die entsprechende radiale Bewegung des Endes des Kopplungselementes 20a bzw. 20b und damit auch die Bewegung der elastischen Elemente 25a bzw. 25b bewirken.

Die Innenverzahnung 33 kann beispielsweise aus zwei, axial hintereinander angeordneten, sägezahnförmigen Verzahnung bestehen, deren Steilflanken entgegen der Verstellrichtung ausgerichtet sind, so daß bei der Rückstellbewegung des Antriebshebels 10 die jeweiligen elastischen Elemente auf den flachen Rückflanken der Verzahnung entlanggleiten, ohne daß das Antriebsrad 30 bewegt wird. Das jeweils bei der Verstellbewegung unbelastete Kopplungselement wird über die Kulissenführung abgehoben. Alternativ zu der besonderen Ausgestaltung der Innenverzahnung 33 können Federn vorgesehen sein, die nach der erfolgten Verstellbewegung das treibende Kopplungselement radial nach innen drücken und eine Trennung des elastischen Elements von der Innenverzahnung 33 bewirken.

In den Ausführungsbeispielen gem. der Fig. 1 und 2 ist es grundsätzlich möglich, daß die Kopplungselemente 20a, 20b in der Nullpunktlage des Antriebshebels 10 entweder in Eingriff oder außer Eingriff mit dem Antriebsrad 30 befindlich sind. Je nach Ausgangsstellung sind die entsprechenden Kulissenführungen so zu wählen, daß ein Eingriff bzw. ein Ausrücken der jeweiligen Kopplungselemente erfolgt.

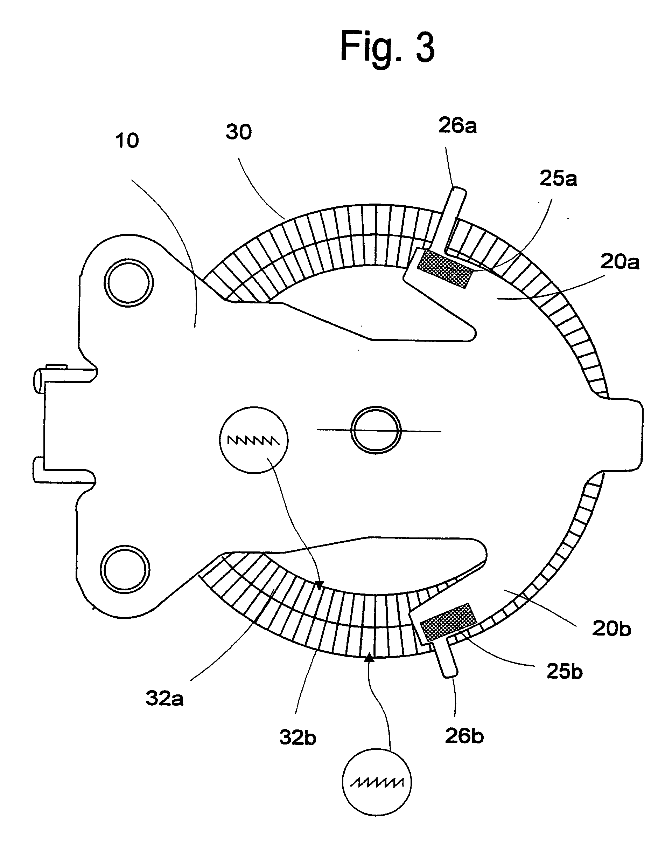

Neben der radial federnden Aufhängung der Kopplungselemente 20a und 20b ist in einer Alternative gem. Fig. 3 vorgesehen, die angeformten Kopplungselemente 20a und 20b auch axial federnd auszubilden, wodurch ein besonders flacher Bauraum des gesamten Antriebes erreicht wird. So ist das Antriebsrad 30 des Antriebes mit zwei konzentrisch angeordneten Verzahnungen 32a und 32b, die bevorzugt sägezahnförmig ausgestaltet sind, verbunden. Die Verzahnungen 32a und 32b sind dabei entgegengesetzt zueinander ausgerichtet, was bedeutet, daß die Steilseite der sägezahnförmigen Verzahnung jeweils dem korrespondieren elastischen Element 25a bzw. 25b entgegensteht und eine wirksame Kopplung des Antriebsrades 30 mit dem Antriebshebel 10 realisiert. Die Ausrichtung der Verzahnungen 32a und 32b ist in den herausgehobenen Detaildarstellungen angedeutet.

Die Führungselemente 26a und 26b, die ebenfalls einstückig an dem Antriebshebel 10 angeformt sind, sind als Laschen ausgebildet und werden in einer nicht dargestellten Kulissenführung geführt, die die Endbereiche der Kopplungselemente 20a und 20b entweder mit den Verzahnungen 32a und 32b in Eingriff bringen bzw. den Eingriff aufheben, je nach dem ob die Kopplungselemente 20a und 20b außer Eingriff oder in Eingriff befindlich gewesen sind.

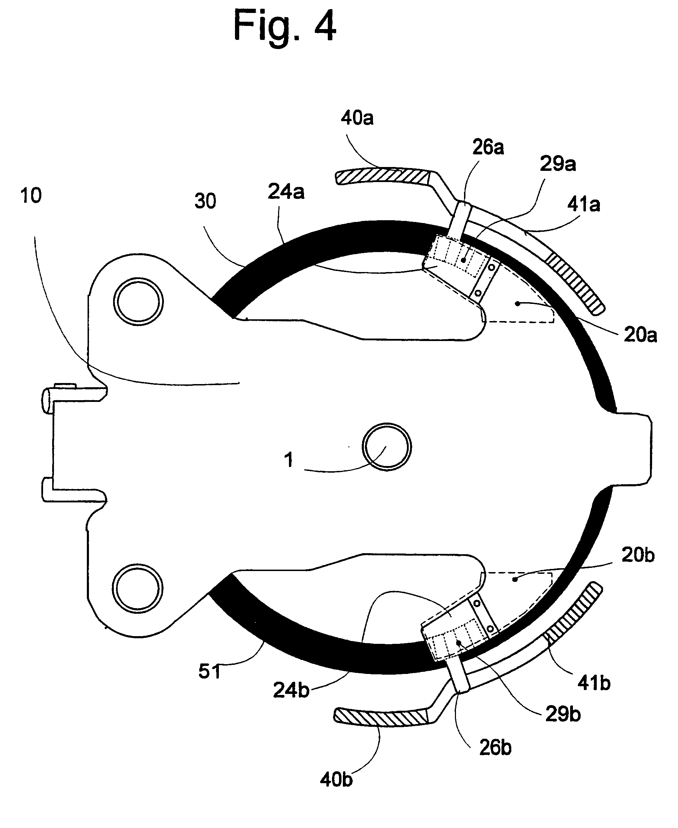

In der Fig. 4 sind separate Kopplungsbereiche 24a und 24b an den an dem Antriebshebel 10 angeformten Kopplungselementen 20a und 20b mittels Nieten befestigt; alternativ kann die Befestigung über die herkömmlichen Verbindungsarten wie Schrauben oder Verkleben oder durch Formschluß über das Einschieben in eine entsprechende Führung erfolgen. Die Kopplungsbereiche sind, wie beim Antrieb gem. Fig. 3 axial wirkend und greifen in ein elastisches Element 51 des Antriebsrades 30 ein. An den Kopplungsbereichen 24a und 24b sind entsprechende Formschlußelemente 29a, 29b angebracht, die aus Gründen der Übersichtlichkeit nur gestrichelt angedeutet sind.

Ebenfalls weisen die separaten Kopplungsbereiche 24a und 24b Führungselemente 26a und 26b auf, die radial nach außen ragen und in einer Kulissenführung 40a bzw. 40b geführt sind. In dem dargestellten Ausführungsbeispiel sind die Formschlußelemente 29a bzw. 29b nicht im Eingriff mit dem elastischen Element 51, wenn der Antriebshebel 10 sich in seiner Nullpunktposition befindet. Wird der Antriebshebel 10 in Uhrzeigerrichtung gedreht, läuft das Führungselement 26b von der rampenartigen Kontur der Kulissenführung 40b und wird aufgrund der federnden Ausbildung der Halterung des Kopplungsbereiches 24b, die vorzugsweise als Federblech ausgebildet ist, axial in Richtung des Antriebsrades 30 gedrückt. Denkbar ist auch eine Zwangsführung innerhalb der Kulisse, so daß keine Federvorspannung benötigt wird.

Das Führungselement 26a läuft dagegen auf dem Kulissenführungsbereich 41a entlang und hält über den gesamten Verstellbereich die Formschlußelemente 29a außer Eingriff mit dem Antriebsrad 30. Bei der Rückstellbewegung des Antriebshebels 10 in seine Nullpunktlage gleitet das Führungselement 26a auf dem Kulissenführungsbereich 41a in die dargestellte Position zurück, ohne daß ein Eingriff mit dem Antriebsrad 30 bewirkt wird.

Aufgrund der Ausgestaltung der Formschlußelemente 29b des Kopplungsbereiches 24b, vorzugsweise als Sägeverzahnung mit der entsprechenden Ausrichtung oder durch einen schräg angestellten Dorn, gleitet der Kopplungsbereich 24b auf dem elastischen Element 51 des Antriebsrades 30 zurück, bis er auf die rampenartige Erhebung der Kulissenführung 40b aufläuft und dort axial angehoben wird. In der Nullpunktlage des Antriebshebels 10 befinden sich beide Führungselemente 26a und 26b auf dem Niveau des Kulissenführungsbereiches 41b und die Formschlußelemente 29a und 29b entsprechend außer Eingriff.

Selbstverständlich ist es möglich, die Formschlußelemente in der Nullpunktlage in Eingriff mit dem elastischen Element 51 zu halten und bei Einleiten der Verstellbewegung das unbelastete Formschlußelement über die Kulissenführung abzuheben.

Neben einer Ausbildung als Federblech können die Kopplungsbereiche 24a und 24b auch auf anderem Wege axial vorbelastet werden, beispielsweise durch eine separate Feder und eine entsprechende gelenkige Aufnahme bzw. Lagerung der Kopplungsbereiche 24a und 24b an dem Antriebshebel 10.

In den Fig. 5 und 5a ist eine Variante der Erfindung mit angeformten Kopplungselementen 20a und 20b gezeigt, an denen axial hervorstehende Führungselemente 26a und 26b angebracht sind. Die Führungselemente 26a und 26b ragen jeweils in eine Kulissenführung 40a und 40b, die vorzugsweise in einem Gehäusedeckel angeordnet ist, der aus Gründen der Übersichtlichkeit nicht dargestellt wurde. Ebenfalls befinden sich die Führungselemente 26a und 26b in der Nullpunktlage in Kontakt mit einer Blattfeder 42a bzw. 42b, wobei die Federn 42a und 42b dergestalt angeordnet sind, daß in der Nullpunktlage des Antriebshebels 10 die elastischen Elemente 25a bzw. 25b aufgrund der in Richtung der Innenverzahnung 33 wirkenden Federkraft der Kopplungselemente 20a und 20b mit der Innenverzahnung 33 in Eingriff stehen.

Bei einer Bewegung des Antriebshebels 10 im Uhrzeigersinn wird das Antriebsrad 30 über das elastische Element 25b des Kopplungselementes 20 in Uhrzeigerrichtung gedreht. Gleichzeitig wird das elastische Element 25a, aufgrund des Entlanggleitens des Führungselementes 26a auf der Kulissenführung 40a radial in Richtung der Achse 1 bewegt und somit außer Eingriff mit der Innenverzahnung 33 gebracht. Dieser Vorgang ist in der Fig. 5a sehr deutlich zu erkennen.

Das Führungselement 26a gleitet mit dem nicht abgerundeten Eckbereich 27a auf dem rampenartigen Verlauf der Kulissenführung 40a entlang, bis der Kulissenführungsbereich 41a erreicht wurde. Das Kopplungselement 20a wird dabei elastisch in Richtung der Achse 1 gebogen und der Kopplungsbereich 22a mit dem daran befestigten elastischen Element 25a wird außer Eingriff mit der Innenverzahnung 33 gebracht.

Dabei nimmt das elastische Element 25a seine Ausgangskontur an, daß bedeutet, daß trotz des Eingriffes des elastischen Elementes 25a mit der Innenverzahnung 33 keine plastische Verformung stattfindet. Im weiteren Verlauf der Verdrehbewegung des Antriebshebels 10 gleitet das Führungselement 26a auf dem Kulissenführungsbereich 41a entlang, der so ausgebildet ist, daß das elastische Element 25a nicht in Eingriff mit der Innenverzahnung 33 treten kann.

Nach Beendigung der Verstellbewegung und Rückführung des Antriebshebels in seine Nullpunktposition nimmt das Kopplungselement 20a die in der Fig. 5 dargestellte Ausgangsposition wieder ein.

Um bei der Rückstellbewegung des Antriebshebels 10 nach dem Verstellvorgang in seine Nullpunktposition das Antriebsrad 30 nicht mitzunehmen, drückt die Feder 42b, die entsprechend angeordnet und ausgelegt ist, in Richtung der Achse 1, wodurch das nunmehr nicht belastete Kopplungselement 20b mitsamt mit dem elastischen Element 25b außer Eingriff mit der Innenverzahnung 33 gebracht wird. Auf diese Weise wird vermieden, daß das Antriebsrad 30 bei der Rückstellbewegung entgegen dem Uhrzeigersinn gedreht wird.

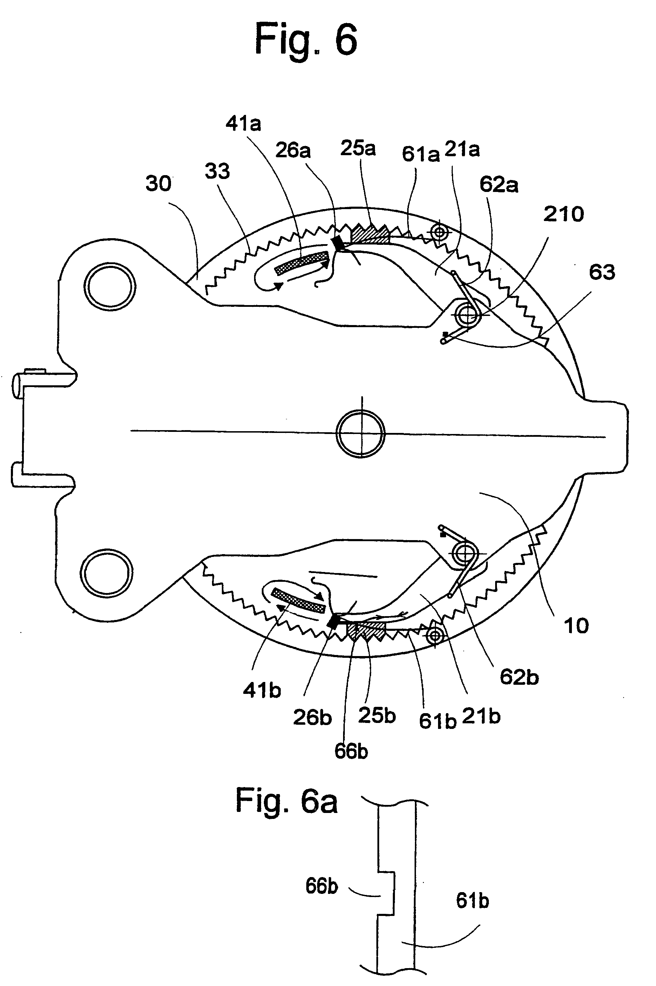

In der Figur 6 ist eine alternative Ausgestaltung der Erfindung dargestellt, bei der ein separates Kopplungselement 21a um eine Achse 210 drehbeweglich an dem Antriebshebel 10 gelagert ist. Eine Schenkelfeder 62, die sich an einem Anschlag 63, der auf dem Antriebshebel 10 befestigt ist, abstützt, übt auf das separate Kopplungselement 21a eine Federkraft aus, die das an dem vorderen Ende des Kopplungselementes 21a angebrachte elastische Element 25a radial nach innen, also von der Innenverzahnung 33 des Antriebsrades 30 weg bewegt. Entgegen dieser Federkraft der Feder 62 wirkt ein Federelement 61, das gehäusefest montiert ist und auf das Führungselement 26a dergestalt einwirkt, daß das elastische Element 25a in der dargestellten Nullpunktlage des Antriebshebels 10 in Eingriff mit der Innenverzahnung 33 des Antriebsrades 30 gehalten wird.

Das Federelement 61a ist vorzugsweise in einem nicht dargestellten Deckel angeordnet, und befindet sich oberhalb der Zeichenebene. Auf gleicher Höhe befindet sich ein Kulissenführungsbereich 41a, der ebenfalls drehfest in einem Deckel bzw. einem Gehäuse angeordnet ist. Bei einer Drehbewegung entgegen dem Uhrzeigersinn gleitet das Führungselement 26a auf dem Federelement 61 entlang und aufgrund der Formgebung des Federelementes 61a läßt die nach außen wirkende Federkraft nach. Das elastische Element 25a ist demgemäß bestrebt, aufgrund der durch die Feder 62a aufgebrachten Kraft sich nach innen zu bewegen. Diese radial nach innen gerichtete Bewegung wird durch das Kulissenführungselement 41a verhindert, das dergestalt angeordnet ist, daß das Führungselement 26a stets in einem vorgegebenen Abstand zu der Innenverzahnung 33 hält und dadurch das elastische Element 25a in Eingriff mit der Innenverzahnung 33 hält. Aus Gründen der Übersichtlichkeit ist der Abstand zwischen dem Kulissenführungsbereich 41a und dem Federelement 61 vergrößert dargestellt.

Am Ende des Kulissenführungsbereiches 41a schnappt das Kopplungselement 21a radial nach innen, da nunmehr lediglich die Federkraft der Feder 62a wirkt und das elastische Element 25a wird außer Eingriff mit der Innenverzahnung 33 gebracht, nachdem das Antriebsrad 30 um den entsprechenden Winkel gedreht wurde. Bei einer Rückstellbewegung ist somit keine Kopplung zwischen dem Antriebshebel 10 und dem Antriebsrad 30 vorhanden und das Antriebsrad 30 wird dementsprechend nicht mit zurückgedreht. Der Verlauf der Bahnkurve des Führungselementes 26a ist anhand der Pfeile angedeutet.

Auf der gegenüberliegenden Seite wird das Kopplungselement 21b entsprechend bewegt, wobei hier das Führungselement 26b aufgrund der Federkraft des Federelementes 61b zunächst im Eingriff mit der Innenverzahnung 33 bleibt. In dem Federelement 61b ist eine Durchtrittsöffnung bzw. eine entsprechend geformte Ausnehmung 66b ausgebildet, durch die das Führungselement 26b hindurchgleiten kann, so daß keine Kraft mehr über das Federelement 61b eingeleitet wird. Nach dem Wegfall der Federkraft wirkt lediglich die nach innen gerichtete Federkraft der Feder 62b, so daß nach einem bestimmten Verstellweg das elastische Element 25b außer Eingriff mit der Innenverzahnung 33 gebracht wird und bei der Rückstellbewegung nicht in Eingriff steht. Die entsprechende Bahnkurve des Führungselementes 26b ist durch den Pfeil angedeutet. Eine entsprechende Ausnehmung ist auch in dem Federelement 61a eingebracht, jedoch hier nicht gesondert eingezeichnet.

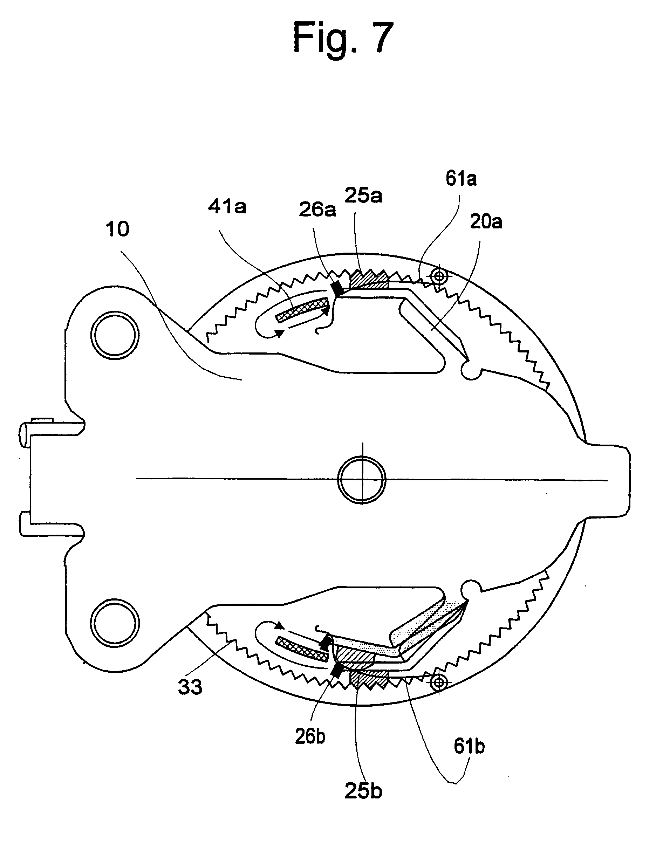

Figur 7 zeigt einen Antrieb, der von der Funktionsweise her dem der Figur 6 entspricht, jedoch statt der gelenkig befestigten, separaten Kopplungselemente angeformte Kopplungselemente 20a und 20b aufweist. Die Kopplungselemente 20a und 20b sind dabei so ausgelegt, daß sie in ihrer Normallage die elastischen Elemente 25a und 25b außer Eingriff mit der Innenverzahnung 33 halten. Die Federelemente 61a und 61b drücken jedoch über das Führungselement 26a bzw. 26b die Kopplungselemente 20a und 20b und damit auch die elastischen Elemente 25a und 25b radial nach außen und bringen diese in Eingriff mit der Innenverzahnung 33. Die Ausgangslage des Kopplungselementes 20b ist in der unteren Hälfte der Figur gepunktet angedeutet. Eine solche Stellung würde vorliegen, wenn das Federelement 61b nicht auf das Führungselement 26b wirken würde. In dieser Stellung ist auch klar zu erkennen, daß das elastische Element 25b, sobald es sich außer Eingriff mit der Innenverzahnung 33 befindet, seine ursprüngliche Kontur wieder einnimmt.

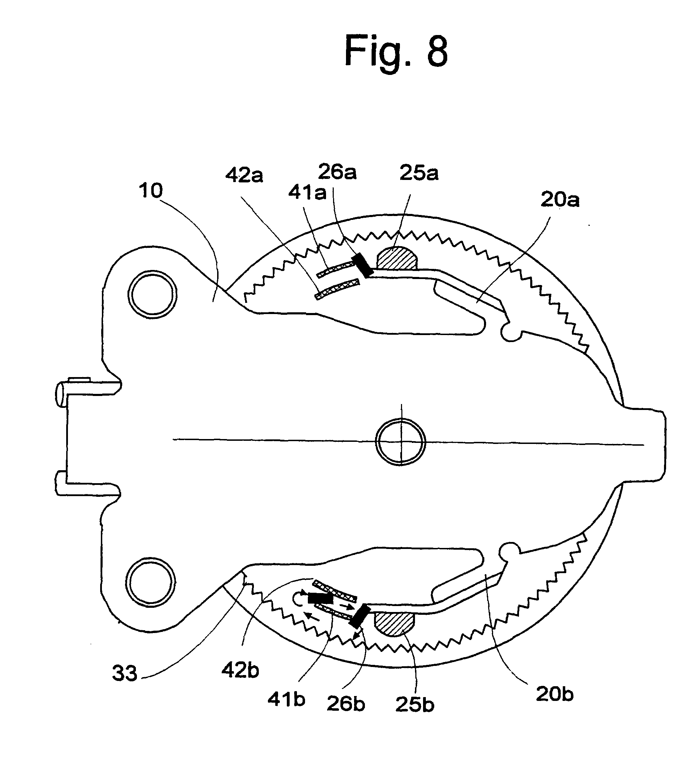

In der Figur 8 ist eine weitere Variante des Antriebes dargestellt, bei der die Kopplungselemente 20a und 20b analog zu der Figur 7 an dem Antriebshebel 10 angeformt sind. Beide elastischen Elemente 25a und 25b befinden sich in der dargestellten Nullpunktposition des Antriebshebels 10 außer Eingriff mit der Innenverzahnung 33 und werden erst bei einer entsprechenden Verstellbewegung durch die schräg angestellten Führungselemente 26a bzw. 26b und das Kulissenführungselement 41a bzw. 41b radial nach außen gedrückt und in Eingriff mit der Innenverzahnung 33 gebracht.

Wird der Antriebshebel 10 in Uhrzeigerrichtung gedreht, gleitet das schräg zu dem Kulissenführungselement 41b angestellte Führungselement 26b gemäß dem Pfeil radial nach außen und bringt das elastische Element 25b in Eingriff mit der Innenverzahnung 33. Sobald das Führungselement 26b das Ende des gehäusefesten Kulissenführungsbereiches 41b erreicht hat, schnappt dieses aufgrund der elastischen Ausbildung des Kopplungselementes 20b radial nach innen, so daß das Führungselement 26b an ein von dem Kulissenführungsbereich 41b beabstandeten, parallel verlaufenden Kulissenführungsbereich 42b anschlägt.

Bei der Rückstellbewegung des Antriebshebels 10 in die Nullpunktlage wird das Führungselement 26b leicht gedreht, und zwischen den Kulissenführungsbereichen 41b und 42b in einem leichten Klemmsitz geführt, wodurch ein Klappern verhindert wird. Diese Drehung des Führungselementes 26b wird durch eine entsprechende elastische Ausbildung bzw. Aufhängung ermöglicht. Die Kulissenführungsbereiche 41b und 42b sind vorteilhafterweise in einem Deckel drehfest gelagert und das Führungselement 26b ragt vorteilhafterweise aus der Ebene des Antriebsrades 30 heraus, wodurch sich Freiheiten bei der Anordnung der Kulissenführungsbereiche 41b und 42b ergeben.

Alternativ zu der in der Figur 8 gezeigten Ausführungsform ist es möglich und vorgesehen, auf den zweiten Kulissenführungsbereich 42b zu verzichten und ein Klappern des Führungselementes 26b durch eine entsprechende Anordnung des Kulissenführungsbereiches 41b zu verhindern, indem bei der Rückwärtsbewegung das Führungselement 26b aufgrund der einer radial nach außen wirkenden Kraft gegen den Kulissenführungsbereich 41b nach außen gedrückt wird. Dies kann beispielsweise dadurch erreicht werden, daß der Kulissenführungsbereich 41b in der Mitte des Führungselementes 26b angeordnet wird, so daß eine Verlagerung sowohl radial nach außen als auch radial nach innen stattfindet, je nach Bewegungsrichtung. Durch die elastische Ausbildung des Kopplungselementes wird für die notwendige Vorspannung gesorgt.

Das nicht in Eingriff mit der Innenverzahnung gebrachte elastische Element bleibt während der gesamten Verstellbewegung außer Eingriff und ebenfalls für die Rückstellbewegung muß kein gesonderter Mechanismus vorgesehen werden, um ein Rückdrehen des Antriebsrades 30 zu vermeiden.

Der Vorteil der Ausführungsformen gemäß der Figuren 6 bis 8 besteht insbesondere darin, daß keine entsprechenden sägezahnförmigen Innenverzahnungen 33 vorgesehen werden müssen, sondern daß eine normale Innenverzahnung 33 genügt, da die elastischen Elemente 25a bzw. 25b bei der Rückstellbewegung des Antriebshebels 10 stets außer Eingriff mit der Innenverzahnung 33 sind. Dadurch wird die Herstellung der Innenverzahnung 33 erleichtert und der Verschleiß der elastischen Elemente 25a bzw. 25b reduziert.

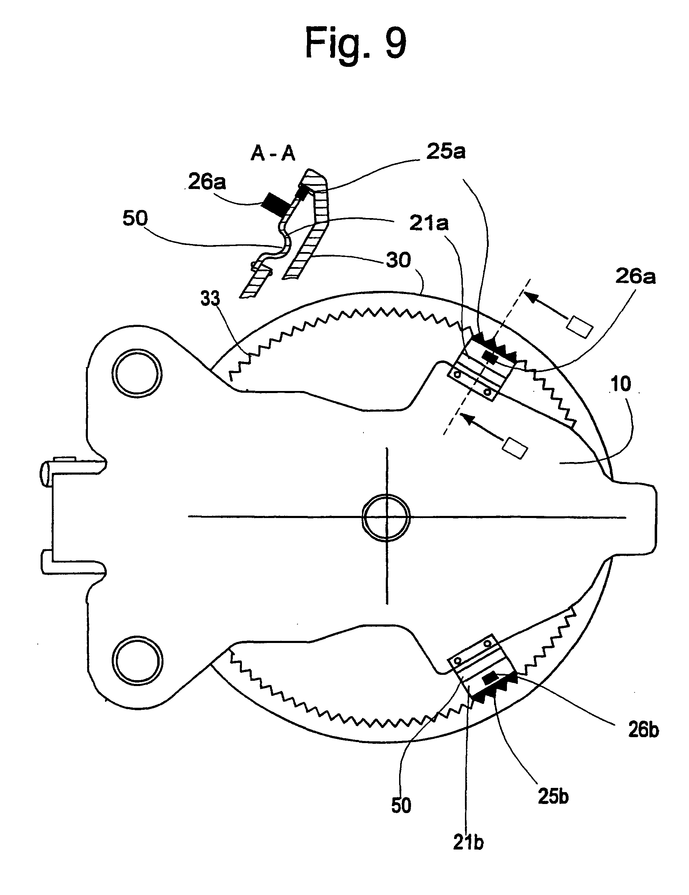

In der Figur 9 ist eine weitere Variante des Antriebes dargestellt, bei der die an dem Antriebshebel 10 vernieteten Kopplungselemente 21a und 21b aufgrund einer Sicke 50 radial federnd ausgebildet sind, wodurch sich eine erhöhte Stabilität der Kopplungselemente 21a und 21b in Drehrichtung erreichen läßt. Ebenfalls ist eine lineare, nach innen gerichtete Bewegung möglich, um die Kopplungselemente 21a und 21b bzw. die elastischen Elemente 25a und 25b außer Eingriff mit der Innenverzahnung 33 zu bringen. Die Verlagerung der Kopplungselemente 21a und 21b erfolgt über eine nicht dargestellte Kulissenführung in Kombination mit der elastischen Ausbildung durch die Sicke 50, wobei auch hier die Alternativen bestehen, die elastischen Elemente 25a und 25b in der Nullpunktlage des Antriebshebels 10 in oder außer Eingriff mit der Innenverzahnung 33 zu halten. Das Verhindern des Mitdrehens des Antriebsrades 30 bei der Rückstellbewegung des Antriebshebels 10 wird entweder durch eine entsprechende Formgebung der Innenverzahnung erreicht oder es werden Mittel zum Abheben des entsprechenden Kopplungselementes vorgesehen, wie zu den vorherigen Ausführungsbeispielen beschrieben.

Es besteht bei einer Ausgestaltung mit radial verschieblichen Kopplungselementen die Möglichkeit, die Innenverzahnung des Antriebsrades axial zu teilen und mit einer sägezahnartigen Verzahnung zu versehen, deren Steilflanken einander entgegengesetzt ausgerichtet sind. Eine solche Anordnung entspricht von Wirkprinzip dem der Figur 3; statt der axial wirkenden Kopplungselemente sind jedoch radial wirkende Kopplungselemente vorgesehen und statt konzentrischer Stirnverzahnungen sind axial versetzte Innenverzahnungen vorgesehen.

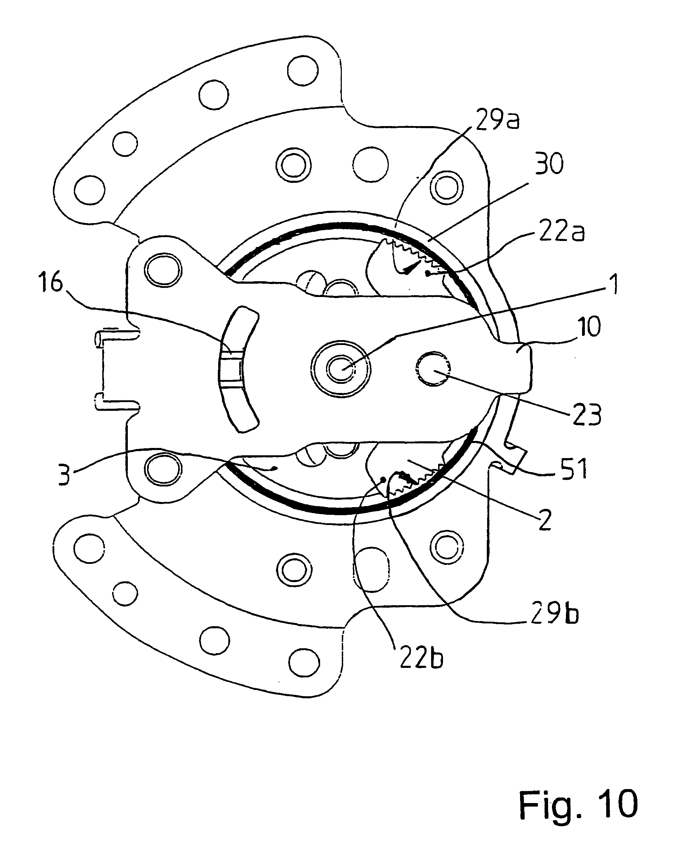

In der Figur 10 ist eine Variante des Antriebs mit einem einstückigen Kopplungselement 2 dargestellt, vergleiche hierzu auch die DE 197 25 899 A1. Der Antriebshebel 10, das Kopplungselement 2 und das Antriebsrad 30 mit einem daran angebrachten elastischen Element 51 lagern auf der Antriebsachse 1.

Das als Wippe ausgebildete Kopplungselement 2 weist zwei symmetrisch angeordnete, auf einem Kreisumfang liegende Kopplungsbereiche 22a und 22b auf, wobei je nach Antriebsrichtung einer der Kopplungsbereiche 22a, 22b über die Formschlußelemente 29a bzw. 29b mit dem elastischen Element 51 des Antriebsrades 30 koppelbar ist. Auf der Symmetrieachse des Kopplungselementes 2 sind zwei in bezug auf die Antriebsachse 1 radial beabstandete Lagerpunkte angeordnet, über die das Kopplungselement 2 zum einen mit dem Antriebshebel 10 und zum anderen mit einer Halteplatte 3 verbunden ist. Der Lagerpunkt zwischen dem Kopplungselement 2 und Antriebshebel 10 wird dabei durch einen Stift oder Zapfen 23 verwirklicht, der in eine entsprechende Aussparung des Antriebshebels 10 eingreift. In entsprechender Weise wird der Lagerpunkt zwischen Halteplatte 3 und Kopplungselement 2 durch einen nicht dargestellten Stift oder Zapfen der Halteplatte 3 ausgebildet, der in ein Loch des Kopplungselementes 2 eingreift.

Das Kopplungselement 2 ist bevorzugt als Sinterteil ausgebildet, wobei der Stift 23 in das Sinterteil eingepreßt ist. Die Halteplatte 3 besteht dagegen bevorzugt aus Kunststoff, um das Gewicht des Antriebs gering zu halten, wobei der Stift beispielsweise einstückig an die Halteplatte 3 angeformt ist. Alternativ besteht auch die Wippe aus Kunststoff.

Bei einer Schwenkbewegung des Antriebshebels 10 aus der Nullpunktstellung heraus wird der in dem Antriebshebel 10 lagernde Stift 23 des Kopplungselements 2 ebenfalls um die Antriebsachse 1 geschwenkt. Aufgrund von Reibungskräften zwischen der Halteplatte 3 und der Antriebsachse 1 sowie ggf. dem Antriebsrad 30 widersetzt sich die Halteplatte 3 zunächst einem Mitdrehen mit dem Antriebshebel 10. Der Stift der Halteplatte 3 bildet dabei ein Gegenlager, so daß an dem Kopplungselement 2 ein Drehmoment entsteht, das Kopplungselement 2 verkippt und je nach Antriebsrichtung einer der Kopplungsbereiche 22a, 22b in das elastische Element 51 des Antriebsrades 30 eingreift.

Bei einem Schwenken des Antriebshebels 10 nach oben aus der Nullpunktlage heraus wird das Kopplungselement 2 beispielsweise nach links verkippt, so daß der Kopplungsbereich 22a mit dem elastische Element 51 des Antriebsrades 30 gekoppelt wird. Auf diese Weise wird eine Drehbewegung des Antriebshebels 10 auf das Antriebsrad 30 übertragen.

Bei einem Rückschwenken des Antriebshebels 10 in die Nullpunktlage wird das an dem Kopplungselement 2 anliegende Drehmoment aufgehoben, so daß der in Eingriff befindliche Kopplungsbereich 22a des Kopplungselementes 2 außer Eingriff gerät und Antriebshebel 10, Kopplungselement 2 und Halteplatte 3 in die Nullpunktstellung zurückkehren, ohne daß diese Rückstellbewegung auf das Antriebsrad 30 übertragen würde.

Des weiteren sorgt eine nur angedeutet dargestellte Drehfeder 16 dafür, das die Halteplatte 3 bei Rückschwenken des Antriebshebels 10 in die Nullpunktlage ebenfalls definiert und mit geringem Spiel in die Nullstellung zurückkehrt, so daß bei einer erneuten Betätigung des Antriebshebels 10 das Kopplungselement 2 sogleich erneut verkippt und mit minimalem Leerlauf eine weitere Drehbewegung auf das Antriebsrad 30 übertragen wird.

### Bezugszeichenliste

- 1 -: Achse
- 2 -: Kopplungselement
- 3 -: Halteplatte
- 10 -: Antriebshebel
- 16 -: Drehfeder
- 20a, 20b -: angeformte Kopplungselemente
- 21a, 21b -: separate Kopplungselemente
- 22a, 22b -: Kopplungsbereiche
- 23 -: Stift
- 24a, 24b -: Kopplungsbereiche
- 25a, 25b -: elastische Elemente an den Kopplungselementen
- 26a, 26b -: Führungselemente
- 27a, 27b -: Ausnehmungen
- 28a, 28b -: Kopplungsbereiche
- 29a, 29b -: Formschlußelemente
- 30 -: Antriebsrad
- 32a, 32b -: sägezahnförmige Stirnverzahnungen
- 33 -: Innenverzahnung
- 40a, 40b -: Kulisse
- 41a, 41b -: Kulissenführungsbereiche
- 42a, 42b -: Federbereiche
- 51 -: elastisches Element am Antriebsrad
- 50 -: Sicke
- 60 -: Rückstellfeder
- 61a, 61a -: Federelemente
- 62a, 62b -: Federn
- 63 -: Anschlag
- 66a, 66b -: Ausnehmung

## Patentansprüche

1. Beidseitig wirkender Antrieb für Verstellvorrichtungen, insbesondere für Sitze in Kraftfahrzeugen, mit
einem drehbaren Antriebsrad (30),
einem ausgehend von einer Nullpunktlage schwenkbar gelagerten Antriebshebel (10) zur Erzeugung einer Drehbewegung des Antriebsrades (30), wobei die Drehbewegung wahlweise in die eine oder andere Drehrichtung erfolgen kann, und
zumindest einem Kopplungselement (2; 20a, 20b; 21a, 21b), das an dem Antriebshebel (10) zur Übertragung eines Drehmoments auf das Antriebsrad (30) angeordnet ist, wobei das Antriebsrad (30) nur dann gedreht wird, wenn der Antriebshebel (10) aus der Nullpunktlage bewegt wird,
**dadurch gekennzeichnet,**
**daß** zur Drehmomentübertragung das Kopplungselement (2; 20a, 20b; 21a, 21b) mit dem Antriebsrad (30) über zumindest ein Formschlußelement (33; 32a, 32b; 29a, 29b) und zumindest ein zugeordnetes elastisches Element (25a, 25b; 51) koppelbar ist.

2. Antrieb nach Anspruch 1, **dadurch gekennzeichnet, daß** an dem Antriebsrad (30) zumindest ein elastisches Element (51) angeordnet ist und an den Kopplungselementen (20a, 20b; 21a, 21b) Formschlußelemente (29a, 29b) angeordnet sind und daß bei einer Einleitung eines Drehmoments über die Kopplungselemente (20a, 20b; 21a, 21b) die Formschlußelemente (29a, 29b) das elastische Element (51) derart konturbildend verformen, daß eine formschlüssige Koppelung zwischen den Formschlußelementen (29a, 29b) und dem elastischen Element (51) zum Drehen des Antriebsrades (30) entsteht.

3. Antrieb nach Anspruch 1, **dadurch gekennzeichnet, daß** an dem Antriebsrad (30) Formschlußelemente (33) angeordnet sind und an den Kopplungselementen (20a, 20b; 21a, 21b) elastische Elemente (25a, 25b) angeordnet sind und daß bei einer Einleitung eines Drehmoments über die Kopplungselemente (20a, 20b; 21a, 21b) die Formschlußelemente (33) die elastischen Elemente (25a, 25b) derart konturbildend verformen, daß eine formschlüssige Koppelung zwischen Formschlußelementen (33) und den elastischen Elementen (25a, 25b) zum Drehen des Antriebsrades (30) entsteht.

4. Antrieb nach mindestens einem der voranstehenden Ansprüche, **dadurch gekennzeichnet, daß** die elastischen Elemente (25a, 25b; 51) am Antriebsrad (30) oder den Kopplungselementen (20a, 20b; 21a, 21b) formschlüssig oder stoffschlüssig befestigt sind.

5. Antrieb nach mindestens einem der voranstehenden Ansprüche, **dadurch gekennzeichnet, daß** die elastischen Elemente (25a, 25b; 51) aus Polyurethan oder einem volumenoder gummielastischen Werkstoff bestehen.

6. Antrieb nach mindestens einem der vorhergehenden Ansprüche, **dadurch gekennzeichnet, daß** die Formschlußelemente (29a, 29b, 33) die Form einer Verzahnung haben.

7. Antrieb nach mindestens einem der Ansprüche 3 bis 8, **dadurch gekennzeichnet, daß** das Antriebsrad (30) mit zwei konzentrischen, sägezahnförmigen Verzahnungen (32a, 32b) mit entgegengesetzt zueinander ausgerichteten Steilflanken versehen ist.

8. Antrieb nach mindestens einem der voranstehenden Ansprüche, **dadurch gekennzeichnet, daß** die Kopplungselemente (20a, 20b; 21a, 21b) in der Nullpunktlage des Antriebshebels (10) mit dem Antriebsrad (30) in Eingriff stehen.

9. Antrieb nach Anspruch 8, **dadurch gekennzeichnet, daß** den Kopplungselementen (20a, 20b; 21a, 21b) eine Kulissenführung (40a, 40b) zugeordnet ist, die die unbelasteten Kopplungselemente (20a, 20b, 21a, 21b) während einer Bewegung des Antriebshebels (10) aus der Nullpunktlage vom Antriebsrad (30) abhebt und bis zum Wiedererreichen der Nullpunktlage abgehoben hält.

10. Antrieb nach Anspruch 9, **dadurch gekennzeichnet, daß** beidseitig außerhalb der Kulissenführungsbereiche (41a, 41b) Federbereiche (42a, 42b) angeordnet sind, die auf die belasteten Kopplungselemente (20a, 20b; 21a, 21b) eine entgegen der Eingriffsrichtung gerichtete Kraft ausüben, wobei die Federkraft so bemessen ist, daß das bei einer Bewegung des Antriebshebels (10) aus der Nullpunktlage belastete Kopplungselement (20a, 20b; 21a, 21b) mit dem Antriebsrad (30) in Eingriff bleibt, während dieses im unbelasteten Zustand bei der Bewegung zur Nullpunktlage hin außer Eingriff gebracht wird.

11. Antrieb nach mindestens einem der Ansprüche 1 bis 7, **dadurch gekennzeichnet, daß** die Kopplungselemente (20a, 20b; 21a, 21b) in der Nullpunktlage nicht mit dem Antriebsrad (30) in Berührung stehen.

12. Antrieb nach Anspruch 11, **dadurch gekennzeichnet, daß** den Kopplungselementen (20a, 20b, 21a, 21b) eine Kulissenführung (40a, 40b, 41a, 41b, 42a, 42b) zugeordnet ist, die während einer Bewegung des Antriebshebels (10) aus der Nullpunktlage die zu belastenden Kopplungselemente (20a, 20b, 21a, 21b) mit dem Antriebsrad (30) in Eingriff bringt und bei der entgegengesetzten Bewegung das dann unbelastete Kopplungselement außer Eingriff bringt.

13. Antrieb nach einem der Ansprüche 9 bis 12, **dadurch gekennzeichnet, daß** die Kulissenführung (40a, 40b, 41a, 41b, 42a, 42b) in einem Abdeckelement des Antriebs ausgebildet ist.

14. Antrieb nach mindestens einem der Ansprüche 9 bis 13, **dadurch gekennzeichnet, daß** an jedem Kopplungselement (20a, 20b; 21a, 21b) ein Führungselement (26a, 26b) angeordnet ist, das in der Kulissenführung (40a, 40b, 41a, 41b, 42a, 42b) geführt wird.

15. Antrieb nach einem der voranstehenden Ansprüche, **dadurch gekennzeichnet, daß** die Kopplungselemente (20a, 20b) an dem Antriebshebel (10) einstückig angeformt oder starr verbunden und axial oder radial federelastisch ausgebildet sind.

16. Antrieb nach einem der Ansprüche 1 bis 14, **dadurch gekennzeichnet, daß** die Kopplungselemente (21a, 21b) separat ausgebildet und in Richtung zugeordneter Kopplungsbereiche (22a, 22b; 24a, 24b) dreh- oder schwenkbar mit dem Antriebshebel (10) verbunden sind.

17. Antrieb nach Anspruch 16, **dadurch gekennzeichnet, daß** die Kopplungselemente (21a, 21b) mittels Federn (61a, 61b; 62a, 62b) axial oder radial belastet sind.

## Claims

1. Drive acting on both sides for adjusting devices, more particularly for seats in motor vehicles, with
a rotatable drive wheel (30),
a drive lever (10) mounted to swivel starting from a zero position to generate rotary movement of the drive wheel (30) wherein the rotary movement can proceed selectively into one or other direction of rotation, and
at least one coupling element (2, 20a, 20b; 21a, 21b) which is mounted on the drive lever (10) to transfer torque to the drive wheel (30) wherein the drive wheel (30) is only then turned when the drive lever (10) is moved out of the zero position,
**characterised in that**
to transfer torque the coupling element (2; 20a, 20b; 21a, 21b) can be coupled to the drive wheel (30) through at least one positive locking element (33; 32a, 32b; 29a 29b) and at least one associated elastic element (25a, 25b; 51) .

2. Drive according to claim 1, **characterised in that** at least one elastic element (51) is mounted on the drive wheel (30) and positive locking elements (29a, 29b) are mounted on the coupling elements (20a, 20b; 21a, 21b) and that when torque is introduced through the coupling elements (20a, 20b; 21a, 21b) the positive locking elements (29a, 29b) deform the elastic element (51) forming a contour so that a positive locking coupling is produced between the positive locking elements (29a, 29b) and the elastic element (51) in order to turn the drive wheel (30).

3. Drive according to claim 1, **characterised in that** positive locking elements (33) are mounted on the drive wheel (30) and elastic elements (25a, 25b) are mounted on the coupling elements (20a; 20b; 21a, 21b) and that when torque is introduced through the coupling elements (20a, 20b; 21a, 21b) the positive locking elements (33) deform the elastic elements (25a, 25b) forming a contour so that a positive locking coupling is produced between the positive locking elements (33) and the elastic elements (25a, 25b) in order to turn the drive wheel (30).

4. Drive according to at least one of the preceding claims **characterised in that** the elastic elements (25a, 25b; 51) are fixed on the drive wheel (30) or the coupling elements (20a, 20b; 21a, 21b) through positive locking or material bonding connection.

5. Drive according to at least one of the preceding claims, **characterised in that** the elastic elements (25a, 25b; 51) are made from polyurethane or a volume or rubber elastic material.

6. Drive according to at least one of the preceding claims, **characterised in that** the positive locking elements (29a, 29b) have the shape of teeth.

7. Drive according to at least one of claims 3 to 8, **characterised in that** the drive wheel (30) is provided with two concentric saw tooth serrations (32a, 32b) with oppositely aligned steep flanks.

8. Drive according to at least one of the preceding claims, **characterised in that** the coupling elements (20a, 20b; 21a, 21b) in the zero position of the drive lever (10) are in engagement with the drive wheel (30).

9. Drive according to claim 8, **characterised in that** the coupling elements (20a, 20b; 21a, 21b) are assigned a slide guide (40a, 40b) which lifts the unstressed coupling elements (20a, 20b; 21a, 21b) during movement of the drive lever (10) out from the zero position of the drive wheel (30) and keeps them raised until the zero position is reached once more.

10. Drive according to claim 9, **characterised in that** spring regions (42a, 42b) are provided on each side outside of the slide guide regions (41a, 41b) and exert on the stressed coupling elements (20a, 20b; 21a, 21b) a force directed opposite the direction of engagement whereby the spring force is measured so that the coupling element (20a, 20b, 21a, 21b) which is loaded during movement of the drive lever (10) out of the zero position remains in engagement with the drive wheel (30) whilst the latter is brought out of engagement in the unstressed state during movement towards the zero position.

11. Drive according to at least one of claims 1 to 7, **characterised in that** the coupling elements (20a, 20b; 21a, 21b) do not contact the drive wheel (30) in the zero position.

12. Drive according to claim 11, **characterised in that** the coupling elements (20a, 20b; 21a, 21b) are associated with a slide guide (40a, 40b, 41a, 41b, 42a, 42b) which during movement of the drive lever (10) from the zero position brings the coupling elements (20a, 20b, 21a, 21b) which are to be loaded into engagement with the drive wheel (30) and with movement in the opposite direction brings the coupling element which is then unloaded out of engagement.

13. Drive according to one of claims 9 to 12, **characterised in that** the slide guide (40a, 40b, 41a, 41b, 42a, 42b) is formed in a cover element of the drive.

14. Drive according to at least one of claims 9 to 13, **characterised in that** a guide element (26a, 26b) is mounted on each coupling element (20a, 20b; 21a, 21b) and is guided in the slide guide (40a, 40b, 41a, 41b, 42a, 42b).

15. Drive according to one of the preceding claims, **characterised in that** the coupling elements (20a, 20b) are formed integral with or rigidly connected to the drive lever (10) and are formed axially or radially spring-elastic.

16. Drive according to one of claims 1 to 14, **characterised in that** the coupling elements (21a, 21b) are formed separate and associated coupling regions (22a, 22b; 24a, 24b) are connected for rotary or swivel movement to the drive lever (10).

17. Drive according to claim 16, **characterised in that** the coupling elements (21a, 21b) are loaded axially or radially by means of springs (61a, 61b, 62a, 62b).

## Revendications

1. Entraînement à action bilatérale pour des dispositifs de déplacement, en particulier pour des sièges dans des véhicules automobiles, comportant
- une roue d'entraînement rotative (30),
- un levier d'entraînement (10) monté avec faculté de pivotement à partir d'une position zéro et destiné à produire un mouvement de rotation de là roue d'entraînement (30), le mouvement de rotation pouvant s'effectuer au choix dans un sens de rotation ou dans l'autre, et
- au moins un élément de couplage (2 ; 20a, 20b ; 21a, 21b) qui est agencé sur le levier d'entraînement (10) pour transmettre un couple de rotation à la roue d'entraînement (30), la roue d'entraînement (30) étant tournée uniquement lorsque le levier d'entraînement (10) est déplacé hors de la position zéro,
**caractérisé en ce que**
pour transmettre le couple de rotation, l'élément de couplage (2 ; 20a, 20b ; 21a, 21b) est susceptible d'être couplé à la roue d'entraînement (30) via au moins un élément de coopération de formes (33 ; 32a, 32b ; 29a, 29b) et via au moins un élément élastique associé (25a, 25b ; 51).

2. Entraînement selon la revendication 1, **caractérisé en ce qu'**au moins un élément élastique (51 ) est agencé sur la roue d'entraînement (30) et des éléments de coopération de formes (29a, 29b) sont agencés sur les éléments de couplage (20a, 20b ; 21a, 21b), et **en ce que** lors de l'application d'un couple de rotation via les éléments de couplage (20a, 20b ; 21a, 21b) les éléments de coopération de formes (29a, 29b) déforment l'élément élastique (51 ) en formant un contour de telle sorte qu'un couplage en coopération de formes s'établit entre les éléments de coopération de formes (29a, 29b) et l'élément élastique (51) pour faire tourner la roue d'entraînement (30).

3. Entraînement selon la revendication 1, **caractérisé en ce que** des éléments de coopération de formes (33) sont agencés sur la roue d'entraînement (30) et des éléments élastiques (25a, 25b) sont agencés sur les éléments de couplage (20a, 20b ; 21a, 21b), et **en ce que** lors de l'application d'un couple de rotation via les éléments de couplage (20a, 20b ; 21a, 21b) les éléments de coopération de formes (33) déforment les éléments élastiques (25a, 25b) en formant un contour de telle sorte qu'un couplage en coopération de formes s'établit entre les éléments de coopération de formes (33) et les éléments élastiques (25a, 25b) pour faire tourner la roue d'entraînement (30).

4. Entraînement selon l'une au moins des revendications précédentes, **caractérisé en ce que** les éléments élastiques (25a, 25b ; 51) sont fixés par coopération de formes ou par coopération de matière sur la roue d'entraînement (30) ou sur les éléments de couplage (20a, 20b ; 21a, 21b).

5. Entraînement selon l'une au moins des revendications précédentes, **caractérisé en ce que** les éléments élastiques (25a, 25b ; 51) sont constitués en polyuréthanne ou en un matériau à volume élastique ou présentant l'élasticité du caoutchouc.

6. Entraînement selon l'une au moins des revendications précédentes, **caractérisé en ce que** les éléments de coopération de formes (29a, 29b, 33) ont la forme d'une denture. au moins des revendications 3 à 8,

7. Entraînement selon l'une au moins des revendications 3 à 8, **caractérisé en ce que** la roue d'entraînement (30) est pourvue de deux dentures concentriques (32a, 32b) en forme de dents de scie présentant des flancs raides orientés en sens opposés les uns aux autres.

8. Entraînement selon l'une au moins des revendications précédentes, **caractérisé en ce que** les éléments de couplage (20a, 20b ; 21a, 21b) sont en engagement avec la roue d'entraînement (30) dans la position zéro du levier d'entraînement (10).

9. Entraînement selon la revendication 8, **caractérisé en ce qu'**un guidage à coulisse (40a, 40b) est associé aux éléments de couplage (20a, 20b ; 21a, 21b) qui soulève les éléments de couplage non chargés (20a, 20b, 21a, 21b) depuis la roue d'entraînement (30) pendant un mouvement du levier d'entraînement (10) hors de la position zéro, et qui les maintient en position soulevée jusqu'à ce que la position zéro soit atteinte de nouveau.

10. Entraînement selon la revendication 9, **caractérisé en ce que** des zones élastiques (42a, 42b) sont agencées des deux côtés à l'extérieur des zones de guidage à coulisse (41a, 41b) et exercent une force dirigée en sens opposé à la direction d'engagement sur les éléments de couplage chargés (20a, 20b ; 21a, 21 b), la force élastique étant dimensionnée de telle sorte que l'élément de couplage (20a, 20b ; 21a, 21b) qui est chargé lors d'un mouvement du levier d'entraînement (10) hors de la position zéro reste en engagement avec la roue d'entraînement (30), tandis que celui-ci est dégagé dans l'état non chargé lors du mouvement vers la position zéro.

11. Entraînement selon l'une au moins des revendications 1 à 7, **caractérisé en ce que** dans la position zéro, les éléments de couplage (20a, 20b ; 21a, 21b) ne sont pas en contact avec la roue d'entraînement (30).

12. Entraînement selon la revendication 11, **caractérisé en ce qu'**un guidage à coulisse (40a, 40b, 41a, 41b, 42a, 42b) est associé aux éléments de couplage (20a, 20b, 21a, 21b), qui amène les éléments de couplage à charger (20a, 20b, 21a, 21b) en engagement avec la roue d'entraînement (30) pendant un mouvement du levier d'entraînement (10) hors de la position zéro, et qui dégage l'élément de couplage alors déchargé lors du mouvement en sens opposé.

13. Entraînement selon l'une des revendications 9 à 12, **caractérisé en ce que** le guidage à coulisse (40a, 40b, 41a, 41b, 42a, 42b) est réalisé dans un élément de recouvrement de l'entraînement.

14. Entraînement selon l'une au moins des revendications 9 à 13, **caractérisé en ce qu'**un élément de guidage (26a, 26b) est agencé sur chaque élément de couplage (20a, 20b ; 21a, 21b), qui est guidé dans le guidage à coulisse (40a, 40b, 41a, 41b, 42a, 42b).

15. Entraînement selon l'une des revendications précédentes, **caractérisé en ce que** les éléments de couplage (20a, 20b) sont conformés d'un seul tenant sur le levier d'entraînement (10) ou y sont reliés de façon rigide et réalisés de façon axialement ou radialement élastique.

16. Entraînement selon l'une des revendications 1 à 14, **caractérisé en ce que** les éléments de couplage (21a, 21b) sont réalisés séparément et reliés avec faculté de rotation ou de pivotement au levier d'entraînement (10) en direction de zones de couplage associées (22a, 22b ; 24a, 24b).

17. Entraînement selon la revendication 16, **caractérisé en ce que** les éléments de couplage (21a, 21b) sont chargés axialement ou radialement au moyen de ressorts (61a, 61b ; 62a, 62b).
